# EUROPEAN PATENT APPLICATION

(11) **EP 3 889 660 A1**
(43) Date of publication of application: **06.10.2021**
(21) Application number: 21166775.3
(22) Date of filing: 01.04.2021
(51) Int. Cl.: G02B 7/02, G02B 7/14

(54) **MOUNTING MECHANISM OF LENS UNIT**

(30) Priority: 02.04.2020 JP 2020067010
(71) Applicant: Mitutoyo Corporation, Kawasaki, Kanagawa 213-8533 (JP)
(72) Inventor: GOTO, Yusuke, Kanagawa, 213-8533 (JP); MASUDA, Norihiko, Kanagawa, 213-8533 (JP)
(74) Representative: Gill Jennings & Every LLP

(57) **Abstract**

A mounting mechanism of a lens unit includes a first mounting mechanism that includes a first mounting portion mountable on a telescope cylinder or the lens unit and a guide groove portion extending in an insertion direction intersecting with an optical axis direction, a second mounting mechanism including a second mounting portion mountable on the telescope cylinder or the lens unit and a guide protrusion portion configured to be housed in the guide groove portion and has a configuration at least a part of which is configured to be insertable into the first mounting mechanism along the insertion direction, and a positioning unit that performs a positioning of the telescope cylinder and the lens unit in the insertion direction in a state where the second mounting mechanism is inserted to a predetermined position with respect to the first mounting mechanism.

## Description

### BACKGROUND OF THE INVENTION

### Field of the Invention

The present invention relates to a mounting mechanism of a lens unit that ensures mounting the lens unit on a telescope cylinder of an optical measuring unit, such as an optical microscope and a vision measuring system.

### Description of the Related Art

There has been known an optical measuring unit that observes and measures a workpiece, such as an optical microscope and a vision measuring system. These optical measuring units have a telescope cylinder whose lower end is sometimes attached to with a mountable/removable lens unit for a purpose that, for example, a magnification change is desired.

As a mounting mechanism for mounting the lens unit on the telescope cylinder, there are, for example, screw-type ones and bayonet-type ones. However, when a screw-type mounting mechanism is employed, screw threads may be damaged when engaging the lens unit while being inclined. With the screw-type mounting mechanism, it is necessary to rotate the lens unit by the number of screw threads when the lens unit is mounted/removed. Accordingly, the lens unit might be dropped, for example, at a timing when the lens unit is released from a hand while performing a mounting/removing operation. When the bayonet-type mounting mechanism is employed, it is necessary to position a hook portion formed at a side of the lens unit with a groove portion disposed at a side of the telescope cylinder. Accordingly, when performing a mounting operation, it may be necessary to visually perceive a position of the groove portion disposed at the telescope cylinder side by looking into it from a lower side, which sometimes lead to a deterioration of workability.

The present invention has been made in consideration of such problems, and it is an objective of the present invention to provide a mounting mechanism that ensures easily mounting a lens unit on a telescope cylinder of an optical measuring unit or the like.

### SUMMARY OF THE INVENTION

A mounting mechanism of a lens unit according to one embodiment of the present invention includes: a first mounting mechanism that includes a first mounting portion and a guide groove portion, the first mounting portion being mountable on one of a telescope cylinder and the lens unit, the guide groove portion extending in an insertion direction intersecting with an optical axis direction of the telescope cylinder; a second mounting mechanism that includes a second mounting portion and a guide protrusion portion, the second mounting portion being mountable on the other of the telescope cylinder and the lens unit, the guide protrusion portion being configured to be housed in the guide groove portion, the second mounting mechanism having a configuration at least a part of which including the guide protrusion portion configured to be insertable into the first mounting mechanism along the insertion direction; and a positioning unit that performs a positioning of the telescope cylinder and the lens unit in the insertion direction in a state where the second mounting mechanism is inserted to a predetermined position with respect to the first mounting mechanism.

Such a configuration ensures easily mounting the lens unit on the telescope cylinder by inserting the second mounting mechanism into the first mounting mechanism in the insertion direction intersecting with the optical axis direction of the telescope cylinder. The positioning unit ensures accurately positioning the positional relation between the telescope cylinder and the lens unit.

The positioning unit may include: three depressed portions or projecting portions disposed in a first opposed portion of the first mounting mechanism opposed to the second mounting mechanism in a state where the second mounting mechanism is inserted to a predetermined position with respect to the first mounting mechanism; and three projecting portions or depressed portions that abut on the three depressed portions or projecting portions, the three projecting portions or depressed portions being disposed in a second opposed portion of the second mounting mechanism opposed to the first opposed portion in this state. The mounting mechanism of the lens unit may further include a biasing unit that generates an elastic force that causes the first opposed portion and the second opposed portion to come close in the state.

When the three depressed portions are assumed as a first groove, a second groove, and a third groove, and the three projecting portions are assumed as a first projecting portion, a second projecting portion, and a third projecting portion, the third groove may intersect with a trajectory on which the third projecting portion moves when the first projecting portion moves along the first groove and the second projecting portion moves along the second groove.

One of the first mounting mechanism and the second mounting mechanism may include an enlarged width portion that increases in width toward a direction approaching the other of the first mounting mechanism and the second mounting mechanism, the biasing unit may include a spring that presses the enlarged width portion from an outside in a radial direction of a circle around the optical axis, and the other of the first mounting mechanism and the second mounting mechanism may include a positioning portion that performs a positioning of the spring in the optical axis direction.

One of the first mounting mechanism and the second mounting mechanism may include: a first portion that includes the first mounting portion or the second mounting portion, the first portion being provided with the three depressed portions or the three projecting portions; and a second portion that includes the guide groove portion or the guide protrusion portion, and the biasing unit may include a spring that applies an elastic force between the first portion and the second portion.

The biasing unit may include a spring, and the spring may be: mounted on one of the first mounting mechanism and the second mounting mechanism; and configured to be slidable with respect to the other of the first mounting mechanism and the second mounting mechanism.

Distances from outer peripheral surfaces of the first mounting mechanism and the second mounting mechanism to the optical axis may be equal to or less than distances from an outer peripheral surface of the telescope cylinder to the optical axis, over a whole circumference.

The first mounting portion or the second mounting portion mountable on the lens unit may be a female thread portion disposed at a lowest portion of the first mounting mechanism or the second mounting mechanism.

The mounting mechanism of the lens unit may further include a sealing material disposed in the first mounting mechanism or the second mounting mechanism.

One of the first mounting mechanism and the second mounting mechanism may include: a third portion including the first mounting portion or the second mounting portion mountable on the telescope cylinder; and a fourth portion including the guide protrusion portion or the guide groove portion, and the fourth portion may be configured to be rotatable in a rotation direction with the optical axis as a rotation axis with respect to the third portion.

### BRIEF DESCRIPTION OF THE DRAWINGS

FIG. 1 is a perspective view of an attachment 100 according to a first embodiment of the present invention;
FIG. 2 is a YZ cross-sectional view of the attachment 100;
FIG. 3 is an XZ cross-sectional view of the attachment 100;
FIG. 4 is perspective view illustrating a configuration of a part of a telescope cylinder side mounting mechanism 110 of the attachment 100;
FIG. 5 is a perspective view illustrating a part of a configuration of a lens side mounting mechanism 140 of the attachment 100;
FIG. 6 is a perspective view illustrating a part of the configuration of the lens side mounting mechanism 140 of the attachment 100;
FIG. 7 is a perspective view illustrating a configuration of a spring 150 of the attachment 100;
FIG. 8 is a perspective view of an attachment 300 according to a second embodiment of the present invention;
FIG. 9 is a perspective view of the attachment 300;
FIG. 10 is a YZ cross-sectional view of the attachment 300;
FIG. 11 is an XZ cross-sectional view of the attachment 300;
FIG. 12 is a perspective view illustrating a part of a configuration of a telescope cylinder side mounting mechanism 310 of the attachment 300;
FIG. 13 is a perspective view illustrating a part of a configuration of a lens side mounting mechanism 340 of the attachment 300;
FIG. 14 is a perspective view of an attachment 400 according to a third embodiment of the present invention;
FIG. 15 is a YZ cross-sectional view of the attachment 400;
FIG. 16 is an XZ cross-sectional view of the attachment 400;
FIG. 17 is a perspective view illustrating a part of a configuration of a telescope cylinder side mounting mechanism 410 of the attachment 400;
FIG. 18 is a perspective view illustrating a part of the configuration of the telescope cylinder side mounting mechanism 410 of the attachment 400;
FIG. 19 is a perspective view illustrating a part of a configuration of the lens side mounting mechanism 440 of the attachment 400; and
FIG. 20 is a perspective view illustrating a part of the configuration of the lens side mounting mechanism 440 of the attachment 400.

### DETAILED DESCRIPTION OF THE EMBODIMENTS

The following exemplarily describes objective lens mounting mechanisms according to some embodiments of the present invention.

In the following description, the same reference numerals are attached to the same portions to omit the descriptions.

The following description describes an example where an optical axis direction of a telescope cylinder of an optical measuring unit or the like corresponds to a Z-direction and an insertion direction of a mounting mechanism corresponds to a Y-direction. However, such a configuration is merely an example for description, and the specific configurations and the like are appropriately adjustable.

The following description exemplarily describes an attachment mountable on a lens unit and a telescope cylinder as a mounting mechanism for mounting the lens unit on the telescope cylinder of an optical measuring unit or the like. However, such a configuration is merely an example for description, and the specific configurations and the like are appropriately adjustable. For example, at least a part of such a mounting mechanism may be a part of at least one of the lens unit and the telescope cylinder.

### [First Embodiment]

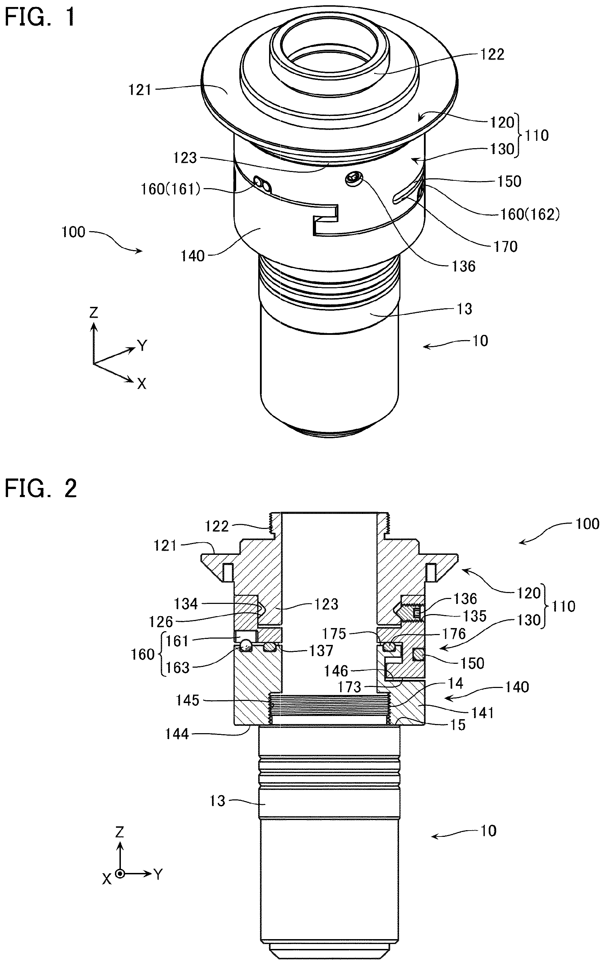

First, with reference to FIG. 1 to FIG. 7, a mounting mechanism of a lens unit according to a first embodiment of the present invention will be described.

FIG. 1 to FIG. 3 illustrate a lens unit 10 and an attachment 100 that mounts this lens unit 10 on a lower end portion of a telescope cylinder of an optical measuring unit or the like (not illustrated).

The lens unit 10 functions as an objective lens unit including an objective lens of an optical measuring unit or the like (not illustrated). For example, as illustrated in FIG. 2, the lens unit 10 includes a lens (not illustrated) and a cover 13 that houses this lens. The cover 13 has an upper end portion where a male thread portion 14 engageable with the attachment 100 or a lower end portion of the telescope cylinder (not illustrated) and an abutting surface 15 that abuts on the attachment 100 or the lower end portion of the telescope cylinder (not illustrated) are provided.

The attachment 100, for example, as illustrated in FIG. 1, includes a telescope cylinder side mounting mechanism 110 mountable on the lower end portion of the telescope cylinder (not illustrated). The telescope cylinder side mounting mechanism 110 includes a securing portion 120 securable onto the lower end portion of the telescope cylinder and a movable portion 130 rotatable in a rotation direction with an optical axis as a rotation axis with respect to the securing portion 120. The attachment 100 includes a lens side mounting mechanism 140 that is configured to be mountable on an upper end portion of the lens unit 10 and is mountable on the telescope cylinder side mounting mechanism 110 by being inserted into the telescope cylinder side mounting mechanism 110 in the Y-direction. The attachment 100 includes a spring 150 that presses the lens side mounting mechanism 140 upward when the lens side mounting mechanism 140 reaches a predetermined position and a positioning unit 160 that positions the telescope cylinder side mounting mechanism 110 and the lens side mounting mechanism 140 according to an elastic force applied from the spring 150.

The attachment 100 is formed into an approximately cylindrical shape. Distances from an outer peripheral surface of the attachment 100 to the optical axis are equal to or less than distances from an outer peripheral surface of the telescope cylinder (not illustrated) to the optical axis, over a whole circumference. For example, in the illustrated example, a radius of an outer peripheral surface of the securing portion 120 of the telescope cylinder side mounting mechanism 110 is approximately the same as a radius of an outer peripheral surface of the telescope cylinder (not illustrated). A radius of an outer peripheral surface of the movable portion 130 of the telescope cylinder side mounting mechanism 110 is smaller than the radius of the outer peripheral surface of the telescope cylinder (not illustrated) and is larger than a radius of an outer peripheral surface of the lens unit 10. A radius of an outer peripheral surface of the lens side mounting mechanism 140 is approximately the same as the radius of the outer peripheral surface of the movable portion 130 of the telescope cylinder side mounting mechanism 110.

The securing portion 120 of the telescope cylinder side mounting mechanism 110 is formed into an approximately cylindrical shape. The securing portion 120 according to the embodiment has a first portion 121 in an approximately circular ring shape, a second portion 122 in an approximately circular ring shape formed above the first portion 121, and a third portion 123 in an approximately circular ring shape formed below the first portion 121, for example, as illustrated in FIG. 2. The first portion 121 has an upper surface that abuts on the lower end portion of the telescope cylinder (not illustrated). The second portion 122 has an outer peripheral surface provided with a male thread portion engageable with the telescope cylinder (not illustrated). A radius of an outer peripheral surface of this male thread portion is approximately as same as a radius of the male thread portion 14 of the lens unit 10. The third portion 123 is provided with a groove 126 extending over a whole circumference in a circumferential direction along an outer peripheral surface of the third portion 123.

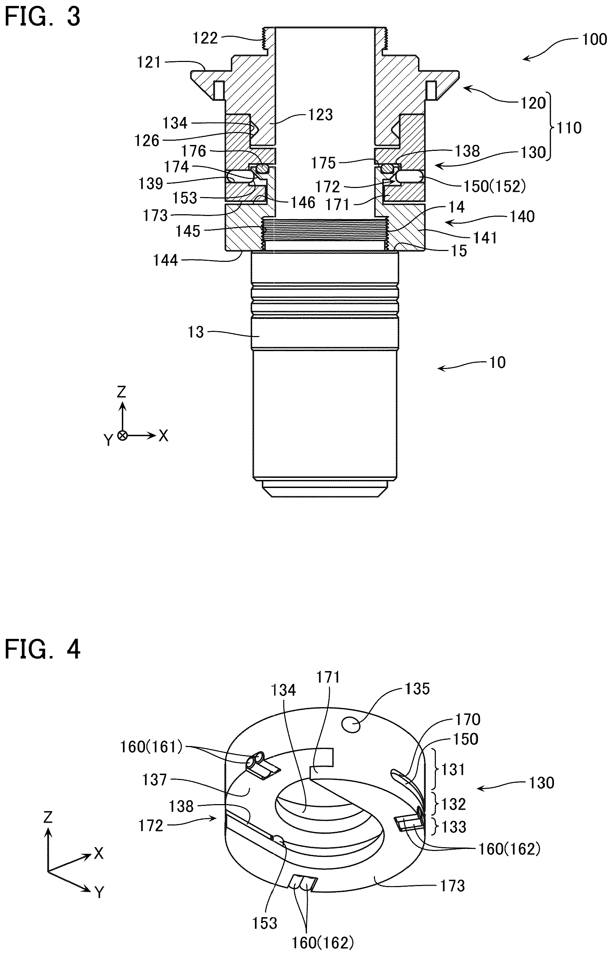

The movable portion 130 of the telescope cylinder side mounting mechanism 110 has a first portion 131 in an approximately cylindrical shape, a second portion 132 in an approximately arc shape formed below this first portion 131, and a third portion 133 in an approximately arc shape formed below the second portion 132, for example, as illustrated in FIG. 4.

The first portion 131 of the movable portion 130 has an inner peripheral surface 134 slidable with respect to an outer peripheral surface of a lower portion of the securing portion 120 and three through-holes 135 that are provided at 120-degree intervals on a circle around the optical axis when viewed along the Z-direction and extend in a radial direction. For example, as illustrated in FIG. 2, the through-hole 135 has an inner peripheral surface on which a female screw screwed with a pointed screw 136 is disposed. This pointed screw 136 is loosened when a positional relation (a relative angle in a rotation direction about the optical axis) between the securing portion 120 and the movable portion 130 of the telescope cylinder side mounting mechanism 110 is adjusted and is fastened when the positional relation is secured. The first portion 131 has a lower surface 137 (FIG. 4) opposed to a part of the lens side mounting mechanism 140 (see FIG. 2 and FIG. 3). The lower surface 137 of the first portion 131 is provided with a pair of columnar members 161 that constitute the positioning unit 160, for example, as illustrated in FIG. 4.

The second portion 132 of the movable portion 130 has an internal surface 138 extending in the Y-direction. The internal surface 138 is opposed to a part of the lens side mounting mechanism 140, for example, as illustrated in FIG. 3. The second portion 132 is provided with two through-holes 139 extending in the X-direction. The second portion 132 has an outer peripheral surface on which a groove portion 170 that is disposed along the outer peripheral surface of the second portion 132, extends in the circumferential direction, and is communicated with the two through-holes 139 is disposed, for example, as illustrated in FIG. 4. In the groove portion 170, the spring 150 is fitted. For example, as illustrated in FIG. 3, a part of the spring 150 is inserted in the through-hole 139 from an outside in the X-direction and projects into a space inside the movable portion 130 to press a part of the lens side mounting mechanism 140.

The third portion 133 (FIG. 4) of the movable portion 130 has a guide protrusion portion 171 that projects in a direction approaching the optical axis in the X-direction and extends in the Y-direction. The guide protrusion portion 171 has an upper surface that forms a guide groove 172 that extends in the Y-direction together with the lower surface 137 of the first portion 131 and the internal surface 138 of the second portion 132. The third portion 133 has a lower surface 173 opposed to a part of the lens side mounting mechanism 140 (FIG. 1) (see FIG. 3). The lower surface 173 of the third portion 133 is provided with two pairs of columnar members 162 that constitute the positioning unit 160.

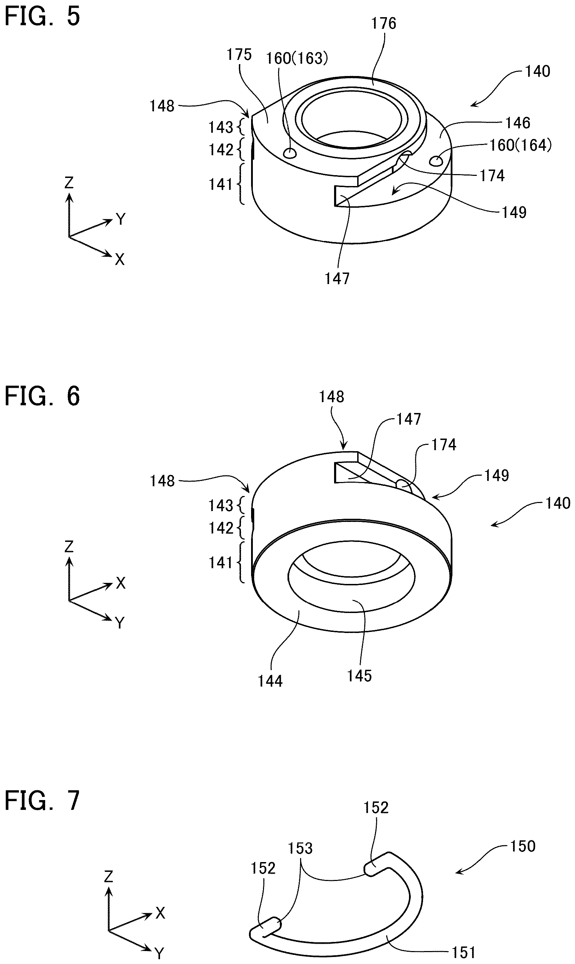

The lens side mounting mechanism 140 has a first portion 141 formed into an approximately circular ring shape, a second portion 142 in an approximately circular ring shape formed above this first portion 141, and a third portion 143 in an approximately circular ring shape formed above the second portion 142, for example, as illustrated in FIG. 5.

The first portion 141 of the lens side mounting mechanism 140 has a lower surface 144 abutting on a part of the lens unit 10, for example, as illustrated in FIG. 2. The first portion 141 has an inner peripheral surface 145 on which a female thread portion screwed with the male thread portion 14 of the lens unit 10 is provided. The first portion 141 has an upper surface 146 (FIG. 5) opposed to the lower surface 173 (FIG. 4) of the movable portion 130 of the telescope cylinder side mounting mechanism 110 (see FIG. 2 and FIG. 3). The upper surface 146 (FIG. 5) of the first portion 141 is provided with a ball 164 that constitutes the positioning unit 160.

The second portion 142 of the lens side mounting mechanism 140 has a side surface 147 in the X-direction extends in the Y-direction. The side surface 147 is opposed to an internal surface of the guide protrusion portion 171 (FIG. 4) of the movable portion 130 of the telescope cylinder side mounting mechanism 110.

The third portion 143 of the lens side mounting mechanism 140 has both end portions in the X-direction that function as a guide protrusion portion 148 that projects in a direction away from the optical axis in the X-direction and extends in the Y-direction. The guide protrusion portion 148 is housed in the guide groove 172 of the movable portion 130 of the telescope cylinder side mounting mechanism 110, for example, as illustrated in FIG. 3. The guide protrusion portion 148 (FIG. 5) has a lower surface that forms a guide groove 149 that extends in the Y-direction together with the upper surface 146 of the first portion 141 and the side surface 147 in the X-direction of the second portion 142. The guide groove 149 houses the guide protrusion portion 171 (FIG. 4) of the movable portion 130 of the telescope cylinder side mounting mechanism 110. At least a part of the third portion 143 functions as an enlarged width portion that increases in width upwardly. That is, for example, as illustrated in FIG. 6, a part of the lower surface of the guide protrusion portion 148 is provided with an approximately cylindrically-shaped inclined surface 174. For example, as illustrated in FIG. 3, as soon as the positional relation between the telescope cylinder side mounting mechanism 110 and the lens side mounting mechanism 140 reaches a predetermined position, the spring 150 presses the inclined surface 174 toward the center side in the radial direction. This applies an upward elastic force to the lens side mounting mechanism 140. The inclined surface 174 also has a function for restraining the lens side mounting mechanism 140 from detaching. For example, as illustrated in FIG. 5, the third portion 143 has an upper surface 175 opposed to the lower surface 137 (FIG. 4) of the first portion 131 of the movable portion 130 of the telescope cylinder side mounting mechanism 110 (see FIG. 2 and FIG. 3). The upper surface 175 of the third portion 143 is provided with a ball 163 that constitutes the positioning unit 160 and an O-ring 176 (sealing material).

The spring 150 has, for example, as illustrated in FIG. 7, a first portion 151 in an arc shape and second portions 152 in a straight line disposed at both end portions of the first portion 151 and are bent at an angle of approximately 90 degrees toward the center side in the X-direction. The second portion 152 has a distal end 153 in a center side in the X-direction formed into an approximately sphere shape. The first portion 151 is fitted in the groove portion 170 (FIG. 4) disposed on the outer peripheral surface of the movable portion 130 of the telescope cylinder side mounting mechanism 110. The second portion 152 projects to a space inside the movable portion 130 of the telescope cylinder side mounting mechanism 110 via the through-hole 139 communicated with this groove portion 170. The distal end 153 of the second portion 152 presses the inclined surface 174 (FIG. 3 and FIG. 6) of the lens side mounting mechanism 140 toward the center side in the X-direction.

The positioning unit 160 includes the columnar members 161 and 162 (FIG. 4) disposed on the lower surfaces of the movable portion 130 of the telescope cylinder side mounting mechanism 110 and the balls 163 and 164 (FIG. 5) disposed on the upper surfaces of the lens side mounting mechanism 140. Three pairs of the columnar members 161 and 162 are disposed at 120-degree intervals on a circle around the optical axis when viewed along the Z-direction and each configure a groove extending in the radial direction of the circle around the optical axis. In particular, the columnar member 161 is disposed at a portion at a near-side in the insertion direction (the Y-direction) in the lower surface 137 of the movable portion 130 to configure the groove extending in the Y-direction. Three balls 163 and 164 are disposed at 120-degree intervals on a circle around the optical axis when viewed along the Z-direction.

When using the attachment 100 according to the first embodiment, first, the telescope cylinder side mounting mechanism 110 (FIG. 1) is mounted on the telescope cylinder of the optical measuring unit or the like (not illustrated) and the lens side mounting mechanism 140 is mounted on the lens unit 10. Next, the second portion 142 and the third portion 143 of the lens side mounting mechanism 140 (FIG. 5) are inserted along the Y-direction into the third portion 133 and the second portion 132 of the movable portion 130 (FIG. 4) of the telescope cylinder side mounting mechanism 110. As soon as the insertion of the lens side mounting mechanism 140 starts, the outer peripheral surface (FIG. 5) of the third portion 143 of the lens side mounting mechanism 140 abuts on the second portion 152 (FIG. 7) of the spring 150. Further pushing the lens side mounting mechanism 140 into a far-side in the insertion direction (the Y-direction) causes the second portion 152 of the spring 150 to be pressed outward in the radial direction by the third portion 143 (FIG. 5) of the lens side mounting mechanism 140 to deform the spring 150. Further pushing the lens side mounting mechanism 140 into a far-side in the insertion direction (the Y-direction) causes the lens side mounting mechanism 140 to reach the predetermined position and causes the second portion 152 of the spring 150 to press the inclined surface 174 (FIG. 6) of the lens side mounting mechanism 140 toward the center side in the radial direction by the elastic force. This causes the lens side mounting mechanism 140 to be pressed upward (see FIG. 3) to fit the balls 163 and 164 into the respective grooves formed by the columnar members 161 and 162. This brings the lens side mounting mechanism 140 into a state of being supported at three points by the positioning unit 160 and is positioned in the X-direction, the Y-direction, the Z-direction, and the inclination direction.

With such a configuration, the lens unit 10 is easily mountable on the telescope cylinder (not illustrated). The positional relation between the telescope cylinder side mounting mechanism 110 and the lens side mounting mechanism 140 can be accurately positioned.

The attachment 100 according to the first embodiment is formed into an approximately cylindrical shape, and the distances from the outer peripheral surface of the attachment 100 to the optical axis are equal to or less than the distances from the outer peripheral surface of the telescope cylinder of the optical measuring unit or the like to the optical axis, over the whole circumference. With such a configuration, when, for example, a ring light is attached to the telescope cylinder, an interference between the ring light and the attachment 100 can be reduced.

In the attachment 100 according to the first embodiment, the female thread portion screwed with the male thread portion 14 of the lens unit 10 is disposed on the inner peripheral surface 145 of the first portion 141 (FIG. 6) disposed at the lowest portion of the lens side mounting mechanism 140. Accordingly, the lens unit 10 is easily mountable on the lens side mounting mechanism 140.

The attachment 100 according to the first embodiment ensures avoiding entrance of dust and light into the telescope cylinder with the O-ring 176 disposed on the upper surface 175 of the lens side mounting mechanism 140, for example, as described with reference to FIG. 5.

### [Second Embodiment]

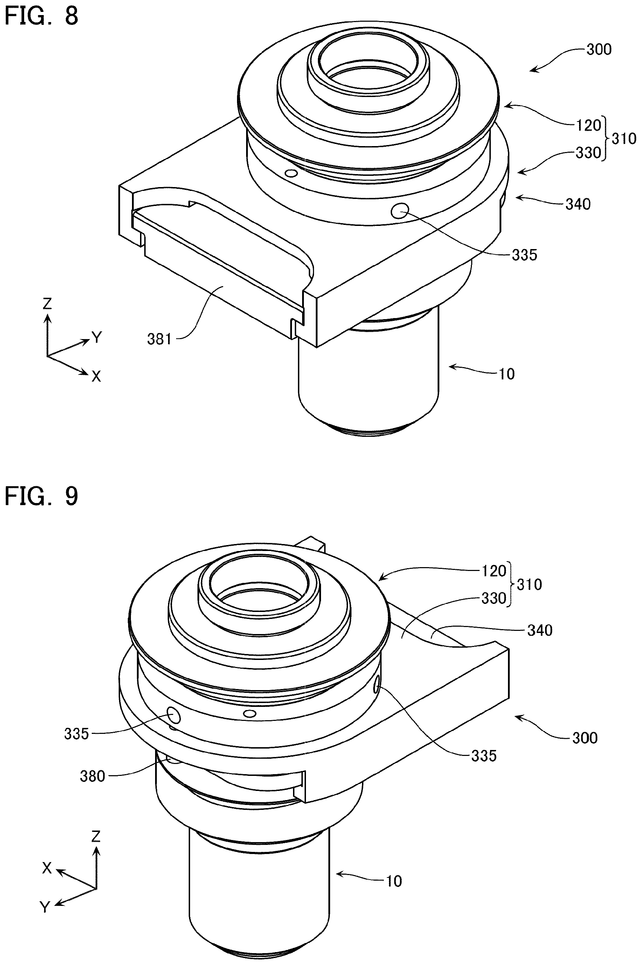

Next, with reference to FIG. 8 to FIG. 13, a mounting mechanism of a lens unit according to a second embodiment of the present invention will be described.

FIG. 8 to FIG. 11 illustrates the lens unit 10 and an attachment 300 that mounts this lens unit 10 on the lower end portion of the telescope cylinder of the optical measuring unit or the like (not illustrated).

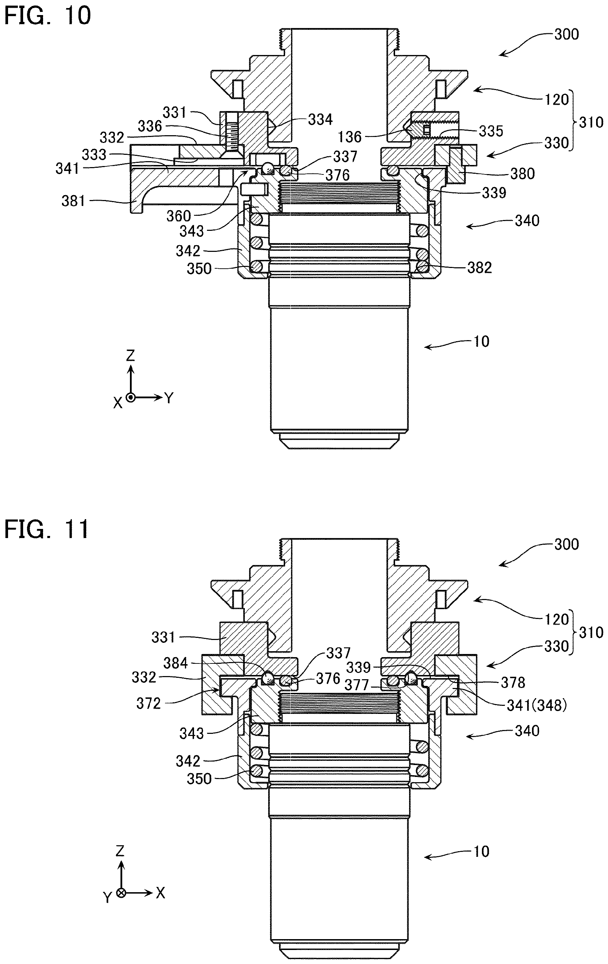

The attachment 300 includes, for example, as illustrated in FIG. 8, a telescope cylinder side mounting mechanism 310 mountable on the lower end portion of the telescope cylinder (not illustrated). The telescope cylinder side mounting mechanism 310 includes the securing portion 120 securable onto the lower end portion of the telescope cylinder and a movable portion 330 rotatable in a rotation direction with the optical axis as a rotation axis with respect to the securing portion 120. The attachment 300 includes a lens side mounting mechanism 340 that is configured to be mountable on the upper end portion of the lens unit 10 and is mountable on the telescope cylinder side mounting mechanism 310 by being inserted into the telescope cylinder side mounting mechanism 310 from the Y-direction. The attachment 300 includes a spring 350 that presses a part of members of the lens side mounting mechanism 340 to the upper side and a positioning unit 360 that positions the telescope cylinder side mounting mechanism 310 and the lens side mounting mechanism 340 according to an elastic force applied from the spring 350, for example, as illustrated in FIG. 10.

The movable portion 330 of the telescope cylinder side mounting mechanism 310 includes a first member 331 formed into an approximately circular ring shape and a second member 332 formed into an approximately flat plate shape and connected to the first member 331 by means of screwing or the like.

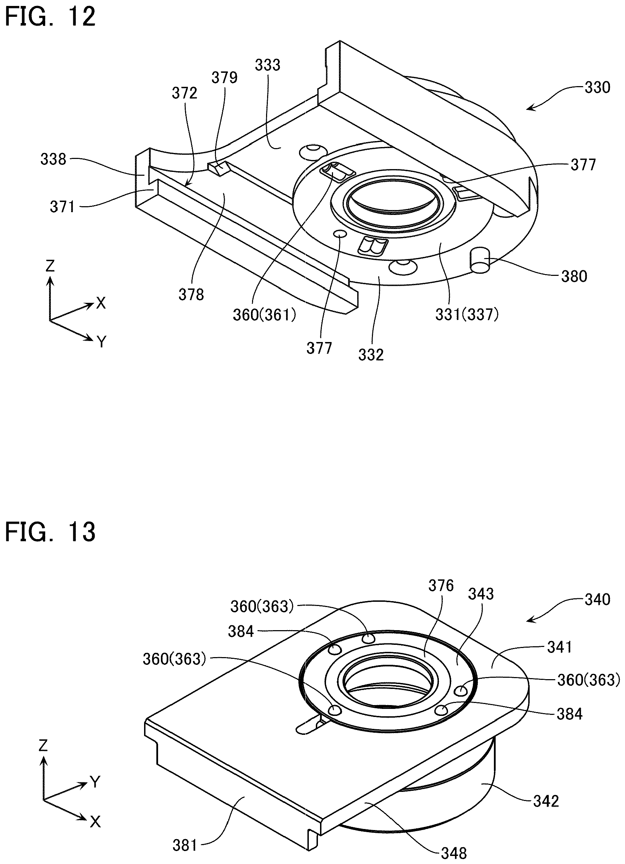

The first member 331 of the movable portion 330 has an inner peripheral surface 334 slidable with respect to an outer peripheral surface of the lower portion of the securing portion 120 and three through-holes 335 that are provided at 120-degree intervals on a circle around the optical axis when viewed in the Z-direction and extend in the radial direction. The through-hole 335 has an inner peripheral surface on which a female screw screwed with the pointed screw 136 is provided. The first member 331 has a lower surface 337 opposed to a part of the lens side mounting mechanism 340. For example, as illustrated in FIG. 12, the lower surface 337 of the first member 331 is provided with three pairs of columnar members 361 constituting the positioning unit 360. The lower surface 337 of the first member 331 is provided with two depressed portions 377 disposed at 180-degrees intervals on a circle around the optical axis when viewed in the Z-direction.

The second member 332 of the movable portion 330 is provided with a circular-shaped through-hole in a predetermined range around the optical axis and a part of the first member 331 is fitted in this through-hole, for example, as illustrated in FIG. 11. The second member 332 is screwed to the first member 331 with screws 336 (FIG. 10).

A lower surface (FIG. 12) of the second member 332 of the movable portion 330 has a region at a near-side in the insertion direction (the Y-direction) with respect to the first member 331 where a first surface 333 disposed above the lower surface 337 of the first member 331 is provided. The region other than that of the lower surface of the second member 332 is provided with a second surface 378 disposed at a height position as same as that of the lower surface 337 of the first member 331. An end portion at a near-side in the insertion direction (the Y-direction) of the second surface 378 is provided with inclined surfaces 379. The first surface 333 and the second surface 378 are opposed to the upper surface of the lens side mounting mechanism 340 (see FIG. 10 and FIG. 11). A region at a far-side in the insertion direction (the Y-direction) of the second surface 378 is provided with a member 380 extending downward, for example, as illustrated in FIG. 10. The member 380 abuts on the lens side mounting mechanism 340 when the lens side mounting mechanism 340 is inserted farther than the predetermined position to restrain the lens side mounting mechanism 340 from detaching in the Y-direction (see FIG. 9 and FIG. 10).

The second member 332 (FIG. 12) of the movable portion 330 has projecting portions 338 that project downward from both end portions in the X-direction and extend in the Y-direction and guide protrusion portions 371 that project in a direction approaching the optical axis in the X-direction from the lower end portions of the projecting portions 338 and extend in the Y-direction. An internal surface of the projecting portion 338 and an upper surface of the guide protrusion portion 371 are opposed to a part of the lens side mounting mechanism 340. The internal surface of the projecting portion 338 and the upper surface of the guide protrusion portion 371 form a guide groove 372 extending in the Y-direction together with the above-described second surface 378.

The lens side mounting mechanism 340 includes a first member 341 formed into an approximately flat plate shape, a second member 342 formed into an approximately cylindrical shape and connected to the first member 341 by means of screwing or the like, and a third member 343 that is formed into an approximately circular ring shape and houses the spring 350 together with the second member 342, for example, as illustrated in FIG. 10, FIG. 11, and FIG. 13.

The first member 341 of the lens side mounting mechanism 340 is provided with a circular-shaped through-hole in a predetermined range around the optical axis, and this through-hole houses a part of the third member 343 in a movable manner in the Z-direction. For example, as illustrated in FIG. 11, near an upper end of this through-hole, a projecting portion 339 that projects toward a direction of the optical axis is disposed. The lower surface of the projecting portion 339 functions as a detachment stopper that abuts on the third member 343.

The first member 341 of the lens side mounting mechanism 340 has an upper surface opposed to a lower surface (the lower surface 337, the first surface 333, and the second surface 378. See FIG. 10 and FIG. 11) of the movable portion 330 of the telescope cylinder side mounting mechanism 310. The first member 341 has both end portions in the X-direction that function as guide protrusion portions 348 projecting in a direction away from the optical axis in the X-direction and extending in the Y-direction. The guide protrusion portion 348 is housed in the guide groove 372 of the movable portion 330 of the telescope cylinder side mounting mechanism 310, for example, as illustrated in FIG. 11. For example, as illustrated in FIG. 10, the first member 341 has an end portion at the near-side in the insertion direction (the Y-direction) where a handle portion 381 projecting downward and extending in the X-direction is disposed. For example, as illustrated in FIG. 8, the upper surface of the end portion at the near-side in the insertion direction (the Y-direction) of the first member 341 and the handle portion 381 are exposed in a state where the lens side mounting mechanism 340 is mounted on the telescope cylinder side mounting mechanism 310, and can be grasped when removing the lens side mounting mechanism 340.

The second member 342 (FIG. 10) of the lens side mounting mechanism 340 has a projecting portion 382 that projects toward the optical axis direction from the lower end portion of the second member 342. The projecting portion 382 has an upper surface abutting on the lower end of the spring 350. An upper end portion of the second member 342 has an outer peripheral surface where a male thread portion screwed with the first member 341 is disposed.

The third member 343 of the lens side mounting mechanism 340 has an inner peripheral surface where a female thread portion screwed with the male thread portion 14 of the lens unit 10 is disposed. The lower surface of the third member 343 abuts on an upper end of the spring 350 and a part of the lens unit 10. The outer peripheral surface of the third member 343 slides with respect to an inner peripheral surface of the through-hole provided in the first member 341. A portion between the outer peripheral surface and the upper surface of the third member 343 is provided with a detachment stopper that abuts on the lower surface of the projecting portion 339 of the first member 341. The upper surface of the third member 343 is opposed to the lower surface (the lower surface 337) of the movable portion 330 of the telescope cylinder side mounting mechanism 310. The upper surface of the third member 343 is provided with balls 363 that constitute the positioning unit 360, balls 384 that avoids a slide between the third member 343 and the lower surface of the movable portion 330 when inserting the lens side mounting mechanism 340 into the telescope cylinder side mounting mechanism 310, and an O-ring 376 (a sealing material), as illustrated in FIG. 13.

The spring 350 is a coil spring, for example, as illustrated in FIG. 10 and FIG. 11. The spring 350 presses the third member 343 upward with respect to the second member 342 of the lens side mounting mechanism 340.

The positioning unit 360 includes the columnar members 361 (FIG. 12) disposed on the lower surface of the movable portion 330 of the telescope cylinder side mounting mechanism 310 and the balls 363 (FIG. 13) disposed on the upper surface of the third member 343 of the lens side mounting mechanism 340. The three pairs of columnar members 361 are disposed at 120-degree intervals on a circle around the optical axis when viewed in the Z-direction and each configure a groove extending in the radial direction of the circle around the optical axis. In particular, two of these columnar members 361 are disposed in a portion at a near-side in the insertion direction (the Y-direction) on the lower surface of the movable portion 330 and configure the groove extending in the Y-direction. The three balls 363 are disposed at 120-degree intervals on the circle around the optical axis when viewed in the Z-direction.

When using the attachment 300 according to the second embodiment, first, the telescope cylinder side mounting mechanism 310 (FIG. 8) is mounted on the telescope cylinder of an optical measuring unit or the like (not illustrated), and the lens side mounting mechanism 340 is mounted on the lens unit 10. Next, the first member 341 (FIG. 13) of the lens side mounting mechanism 340 is inserted into the second member 332 (FIG. 12) of the movable portion 330 of the telescope cylinder side mounting mechanism 310 along the Y-direction. As soon as the insertion of the lens side mounting mechanism 340 starts, the balls 384 (FIG. 13) disposed on the upper surface of the lens side mounting mechanism 340 abut on the inclined surfaces 379 (FIG. 12) disposed on the lower surface of the telescope cylinder side mounting mechanism 310. Further pushing the lens side mounting mechanism 340 into a far-side in the insertion direction (the Y-direction) causes the balls 384 (FIG. 13) to run onto the second surface 378, which presses the third member 343 (FIG. 13) of the lens side mounting mechanism 340 downward to shrink the spring 350 (FIG. 10 and FIG. 11) in the Z-direction. Further pushing the lens side mounting mechanism 340 into the far-side in the insertion direction (the Y-direction) causes the lower surface of the lens side mounting mechanism 340 to slide with respect to the upper surface of the guide protrusion portions 371 (FIG. 12) of the movable portion 330 in a state where the balls 384 (FIG. 13) abut on the second surface 378 of the telescope cylinder side mounting mechanism 310. Further pushing the lens side mounting mechanism 340 into the far-side in the insertion direction (the Y-direction) causes the lens side mounting mechanism 340 to reach the predetermined position, the balls 384 are housed in the depressed portions 377, the balls 363 fit in the grooves formed by the columnar members 361, and the elastic force of the spring 350 secures a positional relation between the telescope cylinder side mounting mechanism 310 and the lens side mounting mechanism 340. This brings the lens side mounting mechanism 340 into a state of being supported at three points by the positioning unit 360 and is positioned in the X-direction, the Y-direction, the Z-direction, and the inclination direction.

With such a configuration, the lens unit 10 is easily mountable on the telescope cylinder (not illustrated). The positional relation between the telescope cylinder side mounting mechanism 310 and the lens side mounting mechanism 340 can be accurately positioned.

In the attachment 300 according to the second embodiment, the second member 342 formed into an approximately cylindrical shape is connected to the first member 341 formed on an approximately flat plate by means of screwing or the like, and the spring 350 is housed in this second member 342. Such a configuration ensures easily securing an installation space for the spring 350. Accordingly, it is possible to relatively easily use the spring 350 having a necessary elastic force.

In the attachment 300 according to the second embodiment, the handle portion 381 is disposed in the first member 341 of the lens side mounting mechanism 340. For example, as illustrated in FIG. 8, the upper surface of the end portion at the near-side in the insertion direction (the Y-direction) of the first member 341 and the handle portion 381 are exposed in a state where the lens side mounting mechanism 340 is mounted on the telescope cylinder side mounting mechanism 310, and can be grasped when removing the lens side mounting mechanism 340. Accordingly, it is possible to easily remove the lens side mounting mechanism 340.

In the attachment 300 according to the second embodiment, a material of high strength can be used for the first member 341 of the lens side mounting mechanism 340 and the second member 332 of the telescope cylinder side mounting mechanism 310, which slide when the lens side mounting mechanism 340 is mounted on the telescope cylinder side mounting mechanism 310.

In the attachment 300 according to the second embodiment, the third member 343 is pressed downward when inserting the lens side mounting mechanism 340 into the telescope cylinder side mounting mechanism 310. Accordingly, the columnar members 361 (FIG. 12) and the balls 363 (FIG. 5) that constitute the positioning unit 360 do not slide with respect to other configurations. Accordingly, a deterioration of the positioning unit 360 can be reduced.

The attachment 300 according to the second embodiment ensures avoiding entrance of dust and light into the telescope cylinder with the O-ring 376 disposed on the upper surface of the lens side mounting mechanism 340, for example, as described with reference to FIG. 13.

### [Third Embodiment]

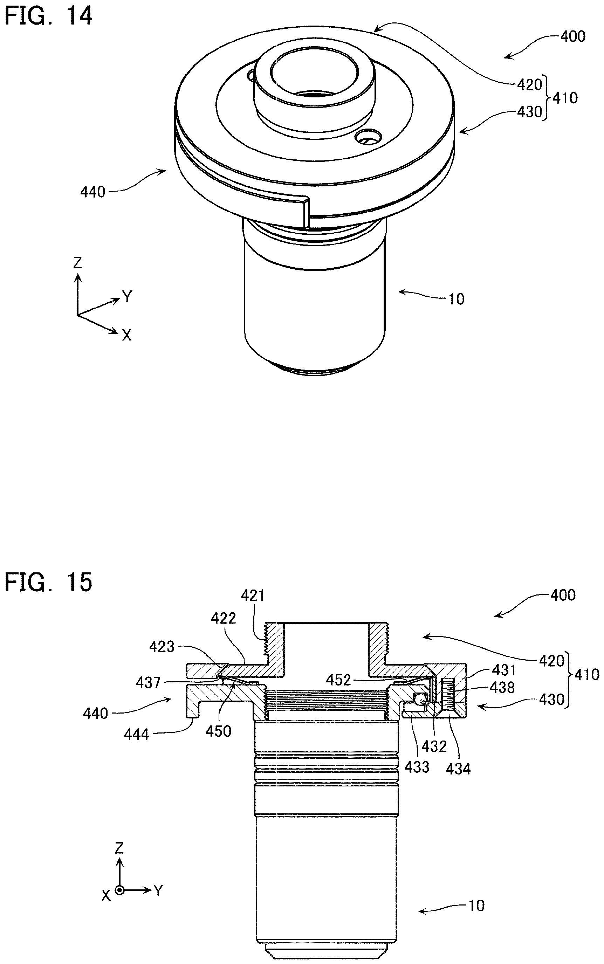

Next, with reference to FIG. 14 to FIG. 20, a mounting mechanism of a lens unit according to a third embodiment of the present invention will be described.

FIG. 14 to FIG. 20 illustrate the lens unit 10 and an attachment 400 that mounts this lens unit 10 on the lower end portion of the telescope cylinder of the optical measuring unit or the like (not illustrated).

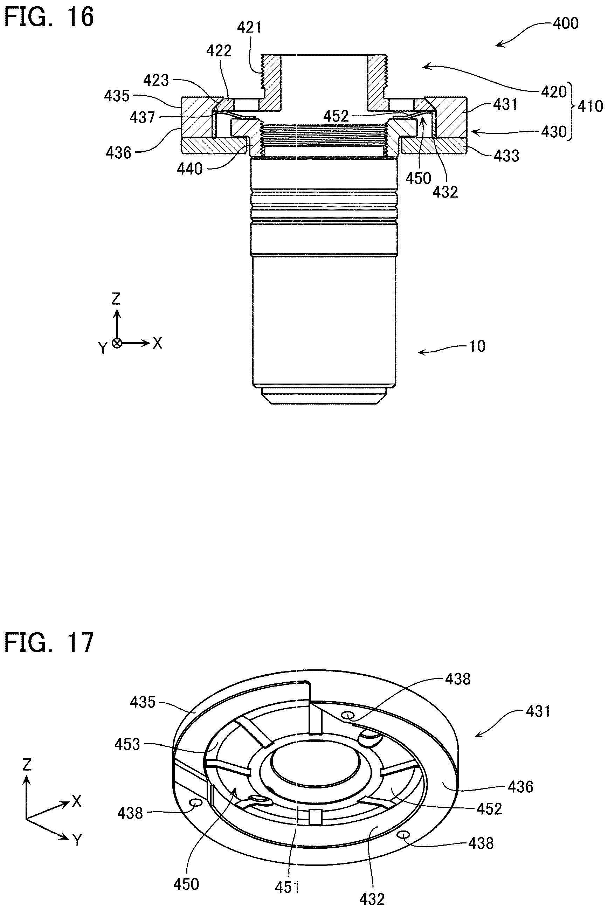

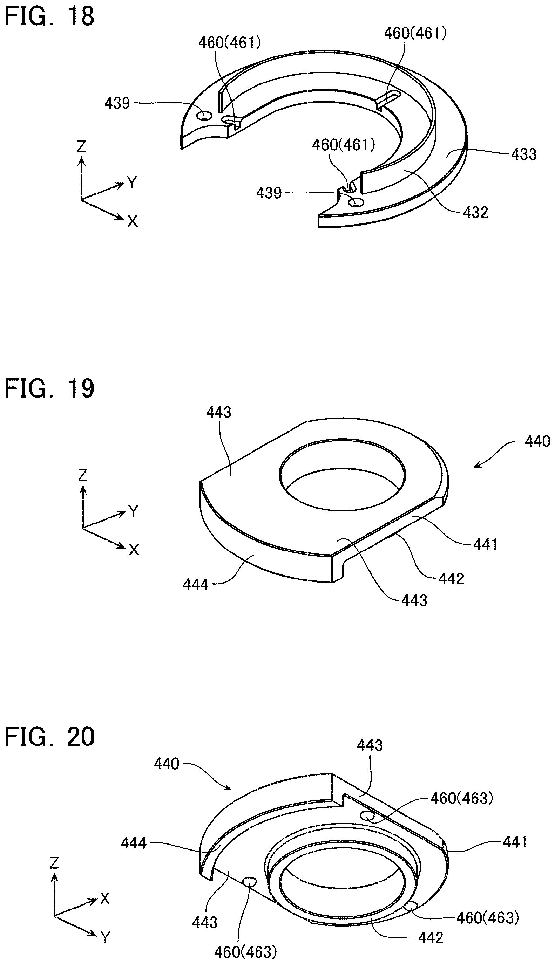

The attachment 400 includes a telescope cylinder side mounting mechanism 410 mountable on the lower end portion of the telescope cylinder (not illustrated), for example, as illustrated in FIG. 14. The telescope cylinder side mounting mechanism 410 includes a securing portion 420 securable onto the lower end portion of the telescope cylinder and a movable portion 430 rotatable in a rotation direction with the optical axis as a rotation axis with respect to the securing portion 420. The attachment 400 includes a lens side mounting mechanism 440 that is configured to be mountable on the upper end portion of the lens unit 10 and is mountable on the telescope cylinder side mounting mechanism 410 by being inserted into the telescope cylinder side mounting mechanism 410 along the Y-direction. The attachment 400 includes a spring 450 (FIG. 17) that presses the lens side mounting mechanism 440 downward when the lens side mounting mechanism 440 reaches the predetermined position and a positioning unit 460 (FIG. 18 and FIG. 20) that positions the telescope cylinder side mounting mechanism 410 and the lens side mounting mechanism 440 according to an elastic force applied from the spring 450.

The attachment 400 is formed into an approximately cylindrical shape (an approximately circular ring shape).

The securing portion 420 of the telescope cylinder side mounting mechanism 410 has a first portion 421 formed into an approximately circular ring shape and a second portion 422 disposed at a lower end of this first portion 421 and formed into an approximately circular ring shape, for example, as illustrated in FIG. 15. The first portion 421 has an outer peripheral surface on which a male thread portion mountable on the telescope cylinder (not illustrated) is disposed. The second portion 422 has an upper surface abutting on the lower end portion of the telescope cylinder (not illustrated). The second portion 422 has an outer peripheral surface on which a tapered surface 423 that rotatably supports the movable portion 430 is provided.

The movable portion 430 of the telescope cylinder side mounting mechanism 410 includes a first member 431 formed into an approximately circular ring shape and supported by the tapered surface 423 of the securing portion 420, a second member 432 formed into an approximately arc shape and housed in the first member 431, and a third member 433 formed into an approximately arc shape and screwed to the first member 431 with screws 434.

The first member 431 of the movable portion 430 has a first portion 435 formed into an approximately circular ring shape and an approximately arc-shaped second portion 436 disposed below the first portion 435, for example, as illustrated in FIG. 17. The first portion 435 has an inner peripheral surface on which a tapered surface 437 abutting on the tapered surface 423 of the securing portion 420 is disposed, for example, as illustrated in FIG. 16. The second portion 436 has an inner peripheral surface that abuts on the second member 432 of the movable portion 430. The second portion 436 is provided with non-through-holes 438 that extend in the Z-direction and are screwed with the screws 434 (FIG. 15).

The second member 432 of the movable portion 430 has an outer peripheral surface abutting on the inner peripheral surface of the first member 431. The second member 432 has an upper surface that abuts on a part of a lower surface of the spring 450. The second member 432 has a lower surface that abuts on an upper surface of the third member 433 of the movable portion 430, for example, as illustrated in FIG. 16.

The third member 433 of the movable portion 430 is provided with through-holes 439 that extend in the Z-direction and are screwed with the screws 434 (FIG. 15), for example, as illustrated in FIG. 18. The third member 433 has an upper surface on which grooves 461 that constitute the positioning unit 460 are disposed. The upper surface and an inner peripheral surface of the third member 433 are opposed to a part of the lens side mounting mechanism 440 (see FIG. 16).

The lens side mounting mechanism 440 has a first portion 441 formed into an approximately ellipse shape and a second portion 442 disposed below the first portion and formed into an approximately circular ring shape, for example, as illustrated in FIG. 19 and FIG. 20.

The first portion 441 and the second portion 442 of the lens side mounting mechanism 440 are provided with a circular-shaped through-hole in a predetermined range around the optical axis, and this through-hole has an inner peripheral surface on which a female thread portion screwed with the male thread portion 14 of the lens unit 10 is disposed.

The first portion 441 of the lens side mounting mechanism 440 has an upper surface that slides with respect to the spring 450 when inserting the lens side mounting mechanism 440 into the telescope cylinder side mounting mechanism 410 (see FIG. 15). The first portion 441 has both end portions in the X-direction that function as guide protrusion portions 443 that project in a direction away from the optical axis in the X-direction and extend in the Y-direction. The guide protrusion portion 443 has a lower surface that slides with respect to the upper surface of the third member 433 (FIG. 18) of the movable portion 430 when inserting the lens side mounting mechanism 440 into the telescope cylinder side mounting mechanism 410. The lower surface of the guide protrusion portion 443 is provided with balls 463 that constitute the positioning unit 460, for example, as illustrated in FIG. 20. The first portion 441 has an end portion at a near-side in the insertion direction (the Y-direction) where a handle portion 444 that projects downward and extends in the circumferential direction is disposed. For example, as illustrated in FIG. 15, the handle portion 444 is exposed in a state where the lens side mounting mechanism 440 is mounted on the telescope cylinder side mounting mechanism 410, and can be grasped when removing the lens side mounting mechanism 440.

A part of an outer peripheral surface of the second portion 442 (FIG. 20) of the lens side mounting mechanism 440 is opposed to an inner peripheral surface of the third member 433 (FIG. 18) of the movable portion 430 when inserting the lens side mounting mechanism 440 into the telescope cylinder side mounting mechanism 410 (see FIG. 16).

The spring 450 is, for example, as illustrated in FIG. 17, a leaf spring in an approximately circular ring shape. The spring 450 has a first portion 451 formed into an approximately circular ring shape, a plurality of second portions 452 disposed outside in the radial direction with respect to this first portion 451, and a third portion 453 disposed outside in the radial direction with respect to the plurality of second portions 452. The first portion 451 has a lower surface abutting on the upper surface of the lens side mounting mechanism 440. The plurality of second portions 452 are formed along an outer peripheral surface in a truncated cone shape. The third portion 453 is formed into flat along the lower surface of the securing portion 420 of the telescope cylinder side mounting mechanism 410. In the example in FIG. 17, the spring 450 is formable by performing a presswork on, for example, an approximately disc-shaped metal member. The spring 450 according to the embodiment presses the lens side mounting mechanism 440 downward. The spring 450 is configured to be slidable with respect to the upper surface of the lens side mounting mechanism 440.

The positioning unit 460 has the grooves 461 (FIG. 18) disposed on the upper surface of the third member 433 of the movable portion 430 and the balls 463 (FIG. 20) disposed on the lower surface of the lens side mounting mechanism 440. Three grooves 461 are disposed at 120-degree intervals on a circle around the optical axis when viewed in the Z-direction, and extend in a radial direction of the circle around the optical axis. In particular, one of these three grooves 461 is disposed at a far-side portion in the insertion direction (the Y-direction) on the upper surface of the third member 433 of the movable portion 430, and extends in the Y-direction. Three balls 463 are disposed at 120-degree intervals on a circle around the optical axis when viewed in the Z-direction.

When using the attachment 400 according to the third embodiment, first, the telescope cylinder side mounting mechanism 410 (FIG. 14) is mounted on the telescope cylinder of the optical measuring unit or the like (not illustrated) and the lens side mounting mechanism 440 is mounted on the lens unit 10. Next, the lens side mounting mechanism 440 is inserted into the telescope cylinder side mounting mechanism 410 along the Y-direction. As soon as the insertion of the lens side mounting mechanism 440 starts, the upper surface of the far-side portion in the insertion direction (the Y-direction) of the lens side mounting mechanism 440 (FIG. 19) abuts on the second portion 452 (FIG. 17) of the spring 450. Further pushing the lens side mounting mechanism 440 to the far-side in the insertion direction (the Y-direction) causes the first portion 451 of the spring 450 to be pressed upward and the upper surface of the lens side mounting mechanism 440 slides with respect to this first portion 451. The spring 450 presses the lens side mounting mechanism 440 downward and the lower surface of the lens side mounting mechanism 440 slides with respect to the upper surface of the third member 433 (FIG. 18) of the telescope cylinder side mounting mechanism 410. Further pushing the lens side mounting mechanism 440 to the far-side in the insertion direction (the Y-direction) causes the three balls 463 (FIG. 20) disposed on the lower surface of the lens side mounting mechanism 440 to abut on the third member 433 (FIG. 18) of the telescope cylinder side mounting mechanism 410. Further pushing the lens side mounting mechanism 440 to the far-side in the insertion direction (the Y-direction) causes the three balls 463 (FIG. 20) to run onto the third member 433 (FIG. 18) of the telescope cylinder side mounting mechanism 410 to further press the first portion 451 of the spring 450 upward. Further pushing the lens side mounting mechanism 440 to the far-side in the insertion direction (the Y-direction) causes the lens side mounting mechanism 340 to reach the predetermined position, the three balls 463 (FIG. 20) fit in the three grooves 461 disposed on the upper surface of the third member 433 (FIG. 18) of the telescope cylinder side mounting mechanism 410, and the elastic force of the spring 450 secures the positional relation between the telescope cylinder side mounting mechanism 410 and the lens side mounting mechanism 440. This brings the lens side mounting mechanism 440 into a state of being supported at three points by the positioning unit 460 and is positioned in the X-direction, the Y-direction, the Z-direction, and the inclination direction.

Such a configuration ensures easily mounting the lens unit 10 on the telescope cylinder (not illustrated). The positional relation between the telescope cylinder side mounting mechanism 410 and the lens side mounting mechanism 440 can be accurately positioned.

In the attachment 400 according to the third embodiment, the positioning of the lens side mounting mechanism 440 is performed by pressing the lens side mounting mechanism 440 downward. Accordingly, for example, even when the lens unit 10 with a large weight is used, regardless of the magnitude of the elastic force of the spring 450, the lens side mounting mechanism 440 can be preferably positioned.

In the attachment 400 according to the third embodiment, the female thread portion screwed with the male thread portion 14 of the lens unit 10 is disposed on the inner peripheral surface of the second portion 442 disposed at the lowest portion of the lens side mounting mechanism 440. Accordingly, the lens unit 10 is easily mountable on the lens side mounting mechanism 440.

### [Other Embodiments]

The mounting mechanisms for the lens unit according to the first embodiment to the third embodiment of the present invention have been described above. However, the above-described configurations are merely examples, and the specific configurations are appropriately adjustable.

For example, the telescope cylinder side mounting mechanisms 110, 310, and 410 are only necessary to have one side of the guide grooves and the guide protrusion portions. The lens side mounting mechanisms 140, 340, and 440 are only necessary to have the other side of the guide grooves and the guide protrusion portions.

For example, in the first embodiment, the spring 150 is disposed in the telescope cylinder side mounting mechanism 110 and the inclined surface 174 is disposed in the lens side mounting mechanism 140. However, for example, the spring 150 may be disposed in the lens side mounting mechanism 140 and the inclined surface may be disposed in the telescope cylinder side mounting mechanism 110. Similarly, in the second embodiment, the spring 350 is disposed in the lens side mounting mechanism 340, and in the third embodiment, the spring 450 is disposed in the telescope cylinder side mounting mechanism 410. However, for example, the spring 350 may be disposed in the telescope cylinder side mounting mechanism 310, and the spring 450 may be disposed in the lens side mounting mechanism 440. Shapes of the springs according to the respective embodiments are also appropriately adjustable.

For example, the first embodiment to the third embodiment have described the example that uses the three depressed portions and the three projecting portions as the positioning unit that performs positioning between the telescope cylinder and the lens unit. However, for example, a planar surface for positioning may be disposed in one of the lens side mounting mechanism and the telescope cylinder side mounting mechanism while an abutting portion for the above-described planar surface for positioning may be disposed on the other of the lens side mounting mechanism and the telescope cylinder side mounting mechanism, and the positioning may be performed using these configurations. In such a case, the mounting mechanism of the lens unit may, for example, include a biasing unit that generates an elastic force in a direction in which the above-described abutting portion abuts on the above-described planar surface for positioning.

For example, in the above-described embodiment, the configurations of the positioning units 160, 360, and 460 may be adjusted. For example, the columnar members 161, 162, and 361 may be replaced with grooves, and the groove 461 may be replaced with a columnar member. The balls 163, 164, 363, and 463 may be replaced with spherical surfaces. The positional relations between the balls 163, 164, 363, and 463; and the columnar members 161, 162, and 361, or the groove 461 may be exchanged.

For example, the first embodiment to the third embodiment have exemplarily described the three grooves that pass through the optical axis and extend in the radial direction of the circle around the optical axis and are disposed on the three straight lines having angles different from one another by 120 degrees each on the XY plane as the depressed portions constituting the positioning unit. However, for example, when one of the projecting portions of the above-described balls 163, 164, 363, 463 and the like moves along a first groove and another one of the above-described projecting portions moves along a second groove, these grooves are only necessary to be disposed on a straight line or on a curved line intersecting with a trajectory on which the last one among the above-described projecting portions moves. Accordingly, the above-described groove may be disposed on the straight line that does not pass through the optical axis, may be disposed on the straight line extending in a direction other than the radial direction of the circle, may be disposed on the straight line on which angles of respective grooves mutually intersect at an angle other than 120 degrees on the XY plane, or may be disposed on a curved line.

For example, the first embodiment to the third embodiment have exemplarily described the three projecting portions that are arranged on a circumference of the circle around the optical axis and have positions on this circumference different by 120 degrees as the projecting portions constituting the positioning unit. However, these three projecting portions do not need to be arranged on such a circumference of the circle. However, these three projecting portions are arranged at positions that form a triangle inside which a line of action of a resultant force by the biasing unit passes through.

For example, the first embodiment and the second embodiment have exemplarily described the O-rings 176 and 376 as a sealing material. However, any sealing materials including an oil seal, a seal of insert molding, and the like can be used instead of the O-rings 176 and 376.

## Claims

1. A mounting mechanism (100) for ensuring mounting a lens unit (10) on a telescope cylinder, the mounting mechanism of the lens unit comprising:
a first mounting mechanism (110) that includes a first mounting portion (122) and a guide groove portion (172), the first mounting portion (122) being mountable on one of the telescope cylinder and the lens unit (10), the guide groove portion (172) extending in an insertion direction (Y) intersecting with an optical axis direction (Z) of the telescope cylinder;
a second mounting mechanism (140) that includes a second mounting portion (145) and a guide protrusion portion (172), the second mounting portion (145) being mountable on the other of the telescope cylinder and the lens unit (10), the guide protrusion portion (148) being configured to be housed in the guide groove portion (172), the second mounting mechanism (140) having a configuration at least a part of which including the guide protrusion portion (148) configured to be insertable into the first mounting mechanism (110) along the insertion direction (Y); and
a positioning unit (160) that performs a positioning of the telescope cylinder and the lens unit (10) in the insertion direction (Y) in a state where the second mounting mechanism (140) is inserted to a predetermined position with respect to the first mounting mechanism (110).

2. The mounting mechanism for the lens unit according to claim 1, wherein
the positioning unit (160) includes:
three depressed portions or projecting portions (161, 162) disposed in a first opposed portion of the first mounting mechanism (110) opposed to the second mounting mechanism (140) in a state where the second mounting mechanism (140) is inserted to a predetermined position with respect to the first mounting mechanism (110); and
three projecting portions or depressed portions (163, 164) that abut on the three depressed portions or projecting portions (161, 162), the three projecting portions or depressed portions (163, 164) being disposed in a second opposed portion of the second mounting mechanism (140) opposed to the first opposed portion in the state, and
the mounting mechanism of the lens unit (10) further comprises a biasing unit (150) that generates an elastic force that causes the first opposed portion and the second opposed portion to come close in the state.

3. The mounting mechanism of the lens unit according to claim 2, wherein
when the three depressed portions (161, 162) disposed in one of the first mounting mechanism (110) and the second mounting mechanism (140) are assumed as a first groove, a second groove, and a third groove, and
the three projecting portions (163, 164) disposed on the other of the first mounting mechanism (110) and the second mounting mechanism (140) are assumed as a first projecting portion, a second projecting portion, and a third projecting portion,
the third groove (161) intersects with a trajectory on which the third projecting portion (163) moves when the first projecting portion (164) moves along the first groove (162) and the second projecting portion (164) moves along the second groove (162).

4. The mounting mechanism of the lens unit according to claim 2 or 3, wherein
one of the first mounting mechanism (110) and the second mounting mechanism (140) includes an enlarged width portion (174) that increases in width toward a direction approaching the other of the first mounting mechanism (110) and the second mounting mechanism (140),
the biasing unit (150) includes a spring (150) that presses the enlarged width portion (174) from an outside in a radial direction of a circle around the optical axis, and
the other of the first mounting mechanism (110) and the second mounting mechanism (140) includes a positioning portion (170) that performs a positioning of the spring (150) in the optical axis direction (Z).

5. The mounting mechanism of the lens unit according to claim 2 or 3, wherein
one of the first mounting mechanism (310) and the second mounting mechanism includes (340):
a first portion (343) that includes the first mounting portion or the second mounting portion, the first portion being provided with the three depressed portions or the three projecting portions; and
a second portion (341) that includes the guide groove portion or the guide protrusion portion, wherein
the biasing unit includes a spring (350) that applies an elastic force between the first portion (343) and the second portion (341).

6. The mounting mechanism of the lens unit according to claim 2 or 3, wherein
the biasing unit includes a spring (450), and
the spring (450) is:
mounted on one of the first mounting mechanism (410) and the second mounting mechanism (440); and
configured to be slidable with respect to the other of the first mounting mechanism (410) and the second mounting mechanism (440).

7. The mounting mechanism of the lens unit according to any one of claims 1-4, wherein
distances from outer peripheral surfaces of the first mounting mechanism (110) and the second mounting mechanism (140) to the optical axis are equal to or less than distances from an outer peripheral surface of the telescope cylinder to the optical axis, over a whole circumference.

8. The mounting mechanism of the lens unit according to any one of claims 1-4 or 6, wherein
the first mounting portion or the second mounting portion mountable on the lens unit (10) is a female thread portion (145) disposed at a lowest portion of the first mounting mechanism or the second mounting mechanism.

9. The mounting mechanism of the lens unit according to any one of claims 1-5 further comprising:
a sealing material (176) disposed in the first mounting mechanism (110) or the second mounting mechanism (140) .

10. The mounting mechanism of the lens unit according to any one of claims 1-9, wherein
one of the first mounting mechanism (110) and the second mounting mechanism (140) includes:
a third portion (120) including the first mounting portion or the second mounting portion (122) mountable on the telescope cylinder; and
a fourth portion (130) including the guide protrusion portion or the guide groove portion, wherein
the fourth portion (130) is configured to be rotatable in a rotation direction with the optical axis as a rotation axis with respect to the third portion (120) .
